# EUROPÄISCHE PATENTSCHRIFT

(11) **EP 1 636 553 B1**
(45) Veröffentlichungstag und Bekanntmachung des Hinweises auf die Patenterteilung: **07.12.2016**
(21) Anmeldenummer: 04740140.1
(22) Anmeldetag: 22.06.2004
(51) Int. Cl.: G01F 23/296, G01N 9/00, G01N 11/16

(54) **ANSATZALARMERZEUGUNG BEI FELDGERÄTEN ZUR FÜLLSTANDSMESSUNG**
ALARM GENERATION FOR FIELD DEVICES FOR LEVEL MEASUREMENT
GÉNÉRATION D'ALERTE DE FORMATION DE DÉPOT AU NIVEAU D'APPAREILS DE TERRAIN POUR LA MESURE DE NIVEAU.

(30) Priorität: 23.06.2003 DE 10328296
(43) Veröffentlichungstag der Anmeldung: 22.03.2006
(73) Patentinhaber: ENDRESS + HAUSER GMBH + CO., 79689 Maulburg (DE)
(72) Erfinder: MÜLLER, Alexander, 79361 Sasbach-Jechtingen (DE); ROMPF, Christoph, Greenwood, IN 46143 (US)
(74) Vertreter: Andres, Angelika Maria
(86) Internationale Anmeldenummer: PCT/EP2004/006707
(87) Internationale Veröffentlichungsnummer: WO 2005/001392

(56) Entgegenhaltungen:
- CH-A- 683 375
- DE-A- 10 014 724
- DE-A- 10 161 071

## Beschreibung

Die Erfindung bezieht sich auf ein Verfahren zur Erkennung von Ansatz bei einem Feldgerät zur Überwachung und/oder Bestimmung einer Prozessgröße eines Mediums, wobei es sich bei der Prozessgröße um den Füllstand handelt, mit einer schwingfähigen Einheit, mit einer Antriebs-/Empfangseinheit, die die schwingfähige Einheit zu Schwingungen anregt, bzw. die die Schwingungen der schwingfähigen Einheit empfängt, und mit einer Regel-/Auswerteeinheit, die die Schwingungen der schwingfähigen Einheit regelt bzw. die die Schwingungen der schwingfähigen Einheit auswertet. Das Medium ist z.B. eine Flüssigkeit in einem Behälter.

Von der Anmelderin werden Feldgeräte zur Messung und/oder Überwachung des Füllstands eines Mediums in einem Behälter unter der Bezeichnung "Liquiphant" produziert und vertrieben. Ein solches Messgerät besteht üblicherweise aus einer schwingfähigen Einheit, einer Antriebs-/Empfangseinheit und einer Regel-/Steuereinheit. Die Antriebs-/Empfangseinheit regt die schwingfähige Einheit - meist eine Schwinggabel - zu Schwingungen an und empfängt die Schwingungen. Die Frequenz (f) der Schwingung hängt z.B. davon ab, ob die schwingfähige Einheit in Luft schwingt oder ob sie von dem Medium bedeckt wird. Somit lässt sich z.B. aus der Frequenz (f) auf den Grad der Bedeckung rückschließen. Aus der Amplitude lässt sich dies ebenfalls ableiten; üblicherweise wird jedoch die Frequenz ausgewertet. In der Antriebs-/Empfangseinheit ist beispielsweise ein piezo-elektrisches Element vorhanden, das ein elektrisches Signal in eine mechanische Schwingung umsetzt, die dann über eine passende Membran auf die schwingfähige Einheit übertragen wird. Entsprechendes gilt für die Umsetzung der mechanischen Schwingung in ein elektrisches Signal. Eine Rückkoppelelektronik, die das Signal der schwingfähigen Einheit wieder verstärkt und rückführt, und die Elektronik zur Auswertung und weiteren Verarbeitung der Schwingung sind in einer Regel-/Auswerteeinheit zusammengefasst. Solche Füllstandmessgeräte werden üblicherweise als Grenzstandsschalter eingesetzt. Dabei wird die schwingfähige Einheit an einer bestimmten Position z.B. innerhalb eines Behälters angebracht, aus dem sich ein Füllstand des Mediums ergibt. Gemessen werden kann entweder das Unterschreiten dieser Füllhöhe (Leerlaufschutz oder Minumumschutz oder Minimumdetektion) oder das Überschreiten dieser Füllhöhe (Überfüllschutz, Maximumschutz oder -detektion). Beim Leerlaufschutz schwingt die schwingfähige Einheit zunächst in dem Medium und dann in Luft oder z.B. in einem zweiten Medium mit einer geringeren Dichte im Falle einer Grenzschichtdetektion (z.B. Öl/Wasser). Die Schwingfrequenz bei in dem Medium oder in dem Medium mit höherer Dichte eingetauchter schwingfähiger Einheit ist geringer als bei der Schwingung in Luft oder in dem Medium mit der geringeren Dichte. Somit kann aus dem Fall, dass die Schwingfrequenz größer wird bzw. dass sie über einen bestimmten Schwellwert steigt, geschlossen werden, dass die schwingfähige Einheit frei schwingt, also nicht mehr bedeckt ist, oder dass die schwingfähige Einheit in dem Medium mit der geringeren Dichte schwingt. Dies bedeutet, dass das Medium mit der höheren Dichte - dies gilt auch für die Unterscheidung von Medium zu Luft - den Füllstand unterschritten hat. Aufgrund dieser Information kann dann beispielsweise ein Abfluss geschlossen oder ein Alarm ausgelöst werden. Entsprechendes gilt für die Verwendung als Maximumschutz.

Ein Problem besteht in der Ansatzbildung. Manche Medien, z.B. schäumende Flüssigkeiten, überziehen die schwingfähige Einheit und lagern sich an ihr ab. Dieser Ansatz erhöht die Masse der schwingfähigen Einheit. Damit verbunden ist eine Verminderung der Schwingfrequenz (f), d.h. durch die zusätzliche Masse schwingt die schwingfähige Einheit mit einer geringeren Frequenz (f). Wird ein solches Feldgerät, dessen schwingfähige Einheit mit Ansatz überzogen ist, für den Leerlaufschutz eingesetzt, so besteht die Gefahr, dass auch dann eine Bedeckt-Meldung ausgegeben wird, wenn die Gabel frei schwingt, weil die Schwingfrequenz (f) durch den Ansatz deutlich unterhalb der Frequenz liegt, die als Maß dafür gewertet wird, dass die Gabel frei ist. Die Sicherheit ist somit nicht mehr unbedingt gegeben und deshalb ist eine Erkennung von Ansatz sehr wichtig. Im Fall, dass das Feldgerät zur Überfüllsicherung verwendet wird, ist eine Ansatzerkennung ebenfalls interessant, da durch den Ansatz auch dann eine Bedeckt-Meldung erfolgt, wenn die schwingfähige Einheit frei schwingt. Ein Ansatz verhindert also, dass das Feldgerät zuverlässig funktioniert.

Daher ist es die Aufgabe der Erfindung, eine Prozessgröße eines Mediums zu überwachen und/oder zu messen, wobei ein Ansatz zu einem entsprechenden Alarm führt. Bei der Prozessgröße handelt es sich um den Füllstand.

Die Aufgabe wird erfindungsgemäß durch ein Verfahren gemäß Anspruch 1 zur Erkennung von Ansatz bei einem Feldgerät gelöst.

Die Aufgabe wird dadurch gelöst, dass die Regel-/Auswerteeinheit einen Ansatzalarm erzeugt, wenn die Schwingfrequenz (f) der Schwingungen der schwingfähigen Einheit einen einstellbaren Grenzwert (G; G_{Minimum}; G_{Maximum}) unterschreitet, wobei der Grenzwert (G; G_{Minimum}; G_{Maximum}) aus gemessenen und/oder berechneten Abhängigkeiten der Schwingfrequenz (f) von der zu überwachenden und/oder zu bestimmenden Prozessgröße und/oder von Prozessbedingungen eingestellt wird. Bei den Prozessbedingungen handelt es sich um die Temperatur und/oder den Druck und/oder die Dichte und/oder die Viskosität des Mediums. Durch Ansatz wird die Schwingfrequenz (f) reduziert. Daher wird überprüft, ob die Frequenz (f) unter einem Grenzwert (G; G_{Minimum}; G_{Maximum}) liegt. In diesem Fall wird ein Alarm oder ein Fehlersignal ausgegeben. Der Grenzwert (G) ist allgemein frei und entsprechend der Anwendung und entsprechend den Prozessbedingungen einstellbar. Bei G_{Minimum} und G_{Maximum} handelt es sich um zwei spezielle Grenzwerte für die Anwendung des Feldgerätes zur Füllstandsdetektion (mehr dazu in den folgenden Ausgestaltungen). Die Schwingfrequenz (f) ist nicht nur vom Ansatz abhängig, sondern auch von den Prozessbedingungen - z.B. Temperatur, Druck, Dichte, Viskosität etc. - und den Prozessgrößen, Füllstand. Die Schwingfrequenz (f) ist weiterhin u.a. von der Ausgestaltung der schwingfähigen Einheit abhängig. Diese Abhängigkeiten der Frequenz (f) von den Prozessbedingungen und der Prozessgröße werden z.B. in einem Abgleich gemessen. Die Abhängigkeiten von der Prozessgröße und den Prozessbedingungen beziehen sich jeweils auf die Ausgestaltung des Feldgerätes und besonders auch auf die Ausgestaltung der schwingfähigen Einheit. Dieser Abgleich kann dann z.B. im Feldgerät selbst oder z.B. in einem Benutzerhandbuch hinterlegt werden. Somit ist bekannt, wie die Frequenz auf andere Einflüsse als die zu überwachende und/oder zu bestimmende Prozessgröße reagiert, und es kann der passende Grenzwert (G) nach den Ausmessungen oder nach Berechnungen eingestellt werden. Der Grenzwert (G; G_{Minimum}; G_{Maximum}) wird aus der kleinsten Schwingfrequenz (f) in Abhängigkeit von den entsprechenden maximal in Bezug auf das Feldgerät zulässigen Prozessbedingungen und/oder in Abhängigkeit von der maximal in Bezug auf das Feldgerät und/oder in Bezug auf die Anwendung zulässigen Füllstand, die Viskosität oder die Dichte eingestellt.

Bei den Prozessbedingungen handelt es sich um Temperatur und/oder Druck und/oder Dichte und/oder Viskosität des Mediums. Für Temperatur und Druck gibt es jeweils einen maximal zulässigen Bereich, außerhalb dessen das Feldgerät Schaden nimmt oder nicht mehr zuverlässig funktionieren kann. Die Dichte und die Viskosität des Mediums sind Größen, die ebenfalls Einfluss auf die Schwingfrequenz (f) haben.
Die Unterscheidung zwischen Prozessbedingung und Prozessgröße hängt dabei natürlich auch davon ab, was gemessen werden soll, so dass je nach Anwendung eine Prozessbedingung auch zur Prozessgröße werden kann und umgekehrt. Bei beiden, Prozessgröße und -bedingung, handelt es sich also um physikalische und/oder chemische Größen, die Einfluss auf die Schwingfrequenz haben. Ist die Prozessgröße der Füllstand, so sind beispielsweise Dichte, Viskosität, Temperatur und Druck die Prozessbedingungen. Da die Frequenz auch von der Temperatur abhängig ist, kann diese auch Prozessgröße sein. Soll Ansatz bei einem als Maximumschalter benutzten Feldgerät erkannt werden, so muss der Grenzwert (G_{Maximum}) ausgehend von der Frequenz eingestellt werden, die sich ergibt, wenn die schwingfähige Einheit frei schwingt. Bei der Benutzung als Minimumschalter ist entsprechend die Frequenz heranzuziehen, die sich ergibt, wenn die schwingfähige Einheit bedeckt ist. Dies bezieht sich also auf die Prozessgröße.

Bei der Bestimmung oder Festlegung des Grenzwertes (G) ist stets darauf zu achten, dass der Grenzwert (G) nicht so gering ist, dass ein Schalten des Feldgerätes - z.B. beim Freiwerden der schwingfähigen Einheit im Fälle der Verwendung des Feldgerätes als Minimumschalter - nicht mehr möglich ist. Daher ist immer die Dynamik der schwingfähigen Einheit zu betrachten. Unter Dynamik wird hierbei die Frequenzänderung verstanden, die sich z.B. durch das Freiwerden der schwingfähigen Einheit, z.B. der Schwinggabel ergibt. Die Dynamik oder der Frequenzhub der schwingfähigen Einheit ist üblicherweise unabhängig vom Ansatz, insoweit der Ansatz nicht eine größere Masse als die schwingfähige Einheit aufweist. Sei z.B. der Grenzwert G = 800 Hz relativ zu einer Schwingfrequenz von 1000 Hz in Luft und hat die schwingfähige Einheit eine Dynamik von 250 Hz, so kann das Feldgerät den Übergang vom bedeckten in den freien Zustand melden. Wäre jedoch der Grenzwert G auf 700 Hz gesetzt, so könnte das Feldgerät nicht in allen Fällen das Freiwerden melden, d.h. in Bezug auf die Dynamik ist dieser Grenzwert G zu klein, bzw. ist die Differenz zwischen dem Grenzwert (G) und der Frequenz, oberhalb der das Freiwerden gemeldet wird, zu groß. Eine Anhebung des Grenzwertes (G), um der Dynamik gerecht zu werden, ist bei gleicher schwingfähiger Einheit dann ggf. mit einer Einschränkung des Anwendungsbereiches - z.B. in Bezug auf einen kleineren Dichte- oder Temperatur- oder Druckbereich -, also einer Einschränkung der Verfügbarkeit verbunden. Als Vorteil ergibt sich jedoch die höhere Sicherheit gegenüber Ansatz. Von daher ist die Anwendung bereits auf Medien fokussiert, die zur Ansatzbildung neigen. Weiterhin sollte eine gewisse Toleranz eingebaut sein, so dass geringe Abweichungen und Schwankungen nicht zu schnell zu einem Alarm führen.

Der Grenzwert (G; Gₘᵢₙᵢₘᵤₘ ; Gₘₐₓᵢₘᵤₘ) wird aus der kleinsten Schwingfrequenz (f) in Abhängigkeit von den entsprechenden maximal in Bezug auf das Feldgerät zulässigen Prozessbedingungen und/oder in Abhängigkeit von der maximal in Bezug auf das Feldgerät und/oder in Bezug auf die Anwendung zulässigen zu überwachenden und/oder zu bestimmenden Prozessgröße eingestellt. Für das Feldgerät
ist im allgemeinen der Anwendungsbereich in Bezug auf einige Prozessbedingungen eingeschränkt. Dadurch wird verhindert, dass es zur Zerstörung des ganzen Feldgerätes oder von Einzelteilen des Feldgerätes kommt. Bereits vor der Zerstörung ist jedoch auch nicht immer gewährleistet, dass es nicht zu Ausfällen des Feldgerätes kommen kann. Somit sind üblicherweise gewisse Einschränkungen gegeben. Die Temperatur ist beispielsweise eingeschränkt, damit die Elektronik durch die Hitze keinen Schaden nimmt oder damit beispielsweise Kleber nicht wieder flüssig werden. Mit den Anwendungsgrenzen sind üblicherweise auch die größten Änderungen der Schwingfrequenz (f) verbunden. Beispielsweise ist die Frequenz (f) mit dem größten zulässigen Druck kleiner als mit dem kleinsten erlaubten Druck. Daher ist der Grenzwert (G; G_{Minimum}; G_{Maximum}) aus der Frequenz bei maximalem Druck zu bestimmen. Ein größerer Druck würde zwar die Frequenz weiter erniedrigen, aber das Feldgerät ist nicht für einen höheren Druck zugelassen. Aus einer Kombination der maximal zulässigen Prozessbedingungen lässt sich somit die kleinste Schwingungsfrequenz (f) und damit der entsprechende Grenzwert (G) bestimmen. Als weiterer Parameter kommt noch die zu messende Prozessgröße hinzu, z.B. dass die schwingfähige Einheit bedeckt ist. Entsprechend der Anwendung ist also auch die Prozessgröße zu berücksichtigen.

Eine Ausgestaltung sieht vor, dass sich die Abhängigkeiten der Schwingfrequenz (f) vom Füllstand und von den Prozessbedingungen jeweils auf die Ausgestaltung des Feldgeräts (1) und die Ausgestaltung der schwingfähigen Einheit (10) beziehen.

Eine Ausgestaltung sieht vor, dass sich der Grenzwert (G) in Abhängigkeit von der Verwendung des Feldgerätes, ob als Minimum- (G_{Minimum}) oder Maximumschalter (G_{Maximum}), eingestellt wird. Der Grenzwert (G) ist davon abhängig, ob die schwingfähige Einheit mit dem Medium bedeckt ist oder ob sie frei schwingt, d.h. der Grenzwert (G) ist somit auch von der Verwendung des Feldgerätes abhängig. Durch die Bedeckung durch das Medium im Falle der Anwendung als Minimumschalter ist bereits die Frequenz deutlich kleiner. Somit ist auch dieser Grenzwert (G_{Minimum}) kleiner als der Grenzwert (G_{Maximum}), der bei der Verwendung des Feldgerätes als Maximumschalter notwendig ist. Bei der Verwendung als Maximumschalter ist weiterhin zu beachten, dass der Grenzwert (G_{Maximum}) auch durch das Bedecken der schwingfähigen Einheit durch das Medium unterschritten wird.

Im Falle eines diskreten Überganges zwischen Unbedeckt und Bedeckt ist dieser Frequenzsprung durch die Dynamik der schwingfähigen Einheit deutlich größer als der, der sich durch einen Ansatz ergeben sollte. Findet der Übergang jedoch graduell statt, so lässt sich nicht zwischen Bedeckung und Ansatz direkt unterscheiden. Für diesen Zweck der Trennung zwischen Ansatz und partieller Bedeckung ist eine Zeitkonstante interessant, so dass erst ein langanhaltendes Unterschreiten des Grenzwertes (G_{Maximum}) einen Alarm auslöst. Bei der Einstellung einer solchen Zeitkonstanten müssen dann jedoch auch die Prozessbedingungen bekannt sein. Beim Maximumschalter ist also zu unterscheiden zwischen dem Unterschreiten des Grenzwertes (G_{Maximum}), ohne dass der entsprechende untere Wert - dies kann beispielsweise der Grenzwert (G_{Minimum}) für die Anwendung als Minimumschalter sein - unterschritten wird, der dem Zustand entspricht, dass die schwingfähige Einheit bedeckt wird - dies führt zu einem Ansatzalarm -, und dem Unterschreiten beider Frequenzwerte, bzw. dem Unterschreiten des unteren Wertes, der sich aus dem Ansteigen des Füllstands ergibt - dies führt zur Bedeckt-Meldung. Ist beispielsweise die schwingfähige Einheit eine Schwinggabel und verklemmt sich z.B. ein Feststoff aus dem Medium zwischen der Gabel, so kann ggf. nicht zwischen Ansatz und dem Medium unterschieden werden, d.h. bei Unterschreiten des maximalen Füllstands gibt das Feldgerät immer noch eine Bedeckt-Meldung aus. Ein solches Verklemmen kann jedoch üblicherweise auch nur durch einen z.B. manuellen Eingriff behoben werden, d.h. für solche extreme Fälle ist immer noch eine Plausibilitätsbetrachtung der Meldung des Feldgerätes notwendig.

Dieses Problem wird dadurch behoben, dass beim Verklemmen der Gabel die Empfangsamplitude derart minimiert ist, dass die Anregeelektronik des Feldgerätes auf eine Eigenresonanz springt, welche üblicherweise unterhalb eines Grenzwertes (G) für einen Ansatzalarm liegt. Die Verfügbarkeit wird ggf. zugunsten der erhöhten funktionellen Sicherheit reduziert.

Eine Ausgestaltung sieht vor, dass der Grenzwert (G; G_{Minimum}; G_{Maximum}) unter Einbeziehung eines maximal zulässigen Ansatzes, bzw. der mit dem maximal zulässigen Ansatz verbundenen Frequenzänderung eingestellt wird. Ein gewisser, sehr geringer Ansatz kann durchaus zulässig sein, weil üblicherweise die Sensoren so gut ausgebildet sind, dass ein geringer Ansatz die Messung vernachlässigbar stört. Weiterhin ist es nicht praktikabel, keinen Ansatz zuzulassen, weil sich dies im Betrieb kaum vermeiden lässt. Dafür wäre ein Medium erforderlich, dass keinerlei Ansatz erzeugt und für diesen Fall wäre der Ansatzalarm nicht erforderlich. Der maximal zulässige Ansatz ist z.B. der Art des Mediums und der Anwendung entsprechend einzustellen.

Eine vorteilhafte Ausgestaltung sieht vor, dass eine Kontrolleinheit vorgesehen ist, die unabhängig von der Regel-/Auswerteeinheit einen Ansatzalarm erzeugt, wenn die Schwingfrequenz (f) der Schwingungen der schwingfähigen Einheit einen einstellbaren Grenzwert (G; G_{Minimum}; G_{Maximum}) unterschreitet. Eine solche unabhängige Kontrolleinheit hat den Vorteil, dass die Funktionalität des Feldgerätes redundant überwacht wird. Dies ist z.B. für Anwendungen mit erhöhter Anforderung an die funktionelle Sicherheit von elektrischen, elektronischen oder programmierbaren elektronischen Systemen relevant. Die Kontrolleinheit kann dabei räumlich von der Regel-/Auswerteeinheit getrennt sein, sie kann jedoch auch ein Bestandteil der Regel-/Auswerteeinheit sein.

Eine Ausgestaltung sieht vor, dass die Regel-/Auswerteeinheit eine Freimeldung erzeugt, wenn die Schwingfrequenz (f) der Schwingungen der schwingfähigen Einheit einen einstellbaren Oberwert (O) überschreitet, wobei der Oberwert (O) aus gemessenen und/oder berechneten Abhängigkeiten der Schwingungsfrequenz (f) von Prozessbedingungen und/oder von der zu bestimmenden und/oder zu überwachenden Prozessgröße eingestellt wird. Die schwingfähige Einheit ist also zunächst bedeckt. Unterschreitet das Medium den vorgegebenen Füllstand, so schwingt die Einheit frei - oder wie oben diskutiert in einem Medium mit einer geringeren Dichte - und zugleich mit einer höheren Schwingfrequenz (f). Je nach Art der schwingfähigen Einheit und des Einbaus kann sich die Frequenz (f) ggf. graduell ändern. Meist wird jedoch nur dann ein Signal gegeben, wenn die schwingfähige Einheit vollständig frei schwingt. Somit ist allein der Übergang zu einer höheren Frequenz noch kein Kriterium. Daher ist ein Oberwert (O) interessant, dessen Überschreiten mit einer vollständig freien schwingfähigen Einheit gleichzusetzen ist. Wie beim Grenzwert (G; G_{Minimum}; G_{Maximum}) werden die Abhängigkeiten der Schwingfrequenz (f) von den Prozessbedingungen und/oder der Prozessgröße gemessen oder berechnet. Praktischerweise kann dabei auf die Werte zur Bestimmung des Grenzwertes (G; G_{Minimum}; G_{Maximum}) zurückgegriffen werden, da es sich um die gleiche schwingfähige Einheit und somit um die gleichen Abhängigkeiten handelt. Der Frequenzbereich zwischen dem Oberwert (O) und dem Grenzwert bei der Verwendung als Maximumschutz (G_{Maximum}) ergibt sich somit aus den Schwingungen der schwingfähigen Einheit ohne Bedeckung oder im Medium mit geringerer Dichte und wird bestimmt durch die Abhängigkeiten der Schwingung von den Prozessbedingungen. Dieser Oberwert (O) zur Meldung der frei schwingenden Gabel ist auch bei der Bestimmung und/oder Überwachung solcher Prozessgrößen wie Dichte und Viskosität relevant.

Eine Ausgestaltung beinhaltet, dass der Oberwert (O) aus der größten Schwingfrequenz (f) in Abhängigkeit von den entsprechenden maximal in Bezug auf das Feldgerät zulässigen Prozessbedingungen und in Abhängigkeit davon, dass die schwingfähige Einheit unbedeckt schwingt eingestellt wird. War es beim Grenzwert (G; G_{Minimum})noch wichtig, dass die schwingfähige Einheit bedeckt war, so muss sie hier passend zur Definition des Oberwertes (O) frei schwingen. Der Oberwert (O) ist somit z.B. aus der Frequenz bei minimalen Druck zu bestimmen, da sich dabei die größte Frequenz ergibt.

Eine Ausgestaltung sieht vor, dass der Oberwert (O) unter Einbeziehung eines maximal zulässigen Ansatzes, bzw. der mit dem maximal zulässigen Ansatz verbundenen Frequenzänderung eingestellt wird. Auch hier sollte also ein Minimum an Ansatz zulässig sein. Weiterhin sollte auch eine gewisse Toleranz in Bezug auf den Oberwert (O) eingebaut werden, so dass z.B. nicht bereits schon eine einzelne Luftblase die Frei-Meldung erzeugen kann.

Eine Ausgestaltung sieht vor, dass oberhalb des Oberwertes (O) ein weiterer Wert vorgesehen ist, dessen Überschreiten zu einem Korrosionsalarm führt. Beim Grenzwert (G; G_{Minimum}) und beim Oberwert (O) sollte beachtet werden, dass die Differenz zwischen den beiden Werten größer ist als die Dynamik der schwingfähigen Einheit, so dass eine Schwingung knapp oberhalb des Grenzwertes (G) z.B. bei bedeckter schwingfähiger Einheit dennoch ein Freiwerden anzeigen kann. Der Grenzwert bei der Verwendung als Maximumschalter G_{Maximum} ist hiervon nicht betroffen, da sich dieser Grenzwert G_{Maximum} auf die unbedeckte schwingfähige Einheit bezieht und da die Differenz zwischen dem Grenzwert G_{Maximum} und dem Oberwert O durch die unterschiedlichen Auswirkungen der Prozessgrößen gegeben ist. Eine Möglichkeit der Realisierung ist, dass Grenzwert (G) und Oberwert (O) jeweils z.B. auf die Dichte oder die Viskosität des Mediums speziell eingestellt wird. Es ist also zu wählen zwischen einer allgemeinen Einschränkung z.B. in Bezug auf die zulässige Dichte oder einer speziellen Abstimmung auf das Medium und für die beim Prozess möglichen Prozessbedingungen wie z.B. die auftretenden Temperaturen.

Die Erfindung wird anhand der nachfolgenden Zeichnungen näher erläutert. Es zeigt:
- Fig. 1:: ein Blockschaltbild der Vorrichtung; und
- Fig. 2:: eine nicht maßstabsgerechte, schematische Lage der einzelnen Frequenzen.

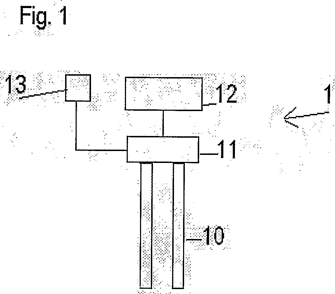

Fig. 1 zeigt das Feldgerät 1 bestehend aus der schwingfähigen Einheit 10 - hier eine Schwinggabel -, der Antriebs-/Empfangseinheit 11 und der Regel-/Auswerteeinheit 12. Ein solches Feldgerät 1 wird beispielsweise in der Nähe des Bodens eines Behälter angebracht, in dem sich das zu überwachende Medium befindet. Unterschreitet das Medium diesen Füllstand, so schwingt die schwingfähige Einheit 10 in der Luft und hat somit eine höhere Schwingungsfrequenz f (Minimumschutz). Dies wird von der Regel-/Auswerteeinheit 12 zu einem Signal verarbeitet. Durch einen Ansatz könnte die Schwingungsfrequenz f jedoch bereits schon so sehr reduziert sein, dass auch die frei gewordenen Schwinggabel unterhalb des Schwellwerte schwingt, der von der Regel-/Auswerteeinheit 12 als frei schwingend erkannt wird. Somit wird kein Alarm ausgelöst und es könnte beispielsweise eine Pumpe heißlaufen, was bei entflammbaren Medien gefährlich ist. Dafür ist im gezeigten Beispiel die Kontrolleinheit 13 vorgesehen, die überprüft, ob die Schwingfrequenz f den Grenzwert G unterschreitet. Diese zusätzliche Überwachung kann z.B. unabhängig von der Regel-/Auswerteeinheit 12 einen Alarm auslösen. So etwas ist z.B. für Anwendungen mit erhöhter Anforderung an die funktionelle Sicherheit wichtig. Die Kontrolleinheit 13 kann jedoch auch Teil der Regel-/Auswerteeinheit 12 sein.

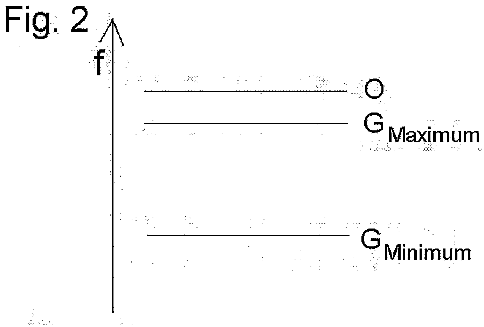

In Fig. 2 sind schematisch und nicht maßstabsgerecht die einzelnen Frequenzen bzw. Grenzwerte eingezeichnet. Die Frequenz f nimmt von unten nach oben zu. Unten findet sich der Grenzwert G_{Minimum} für die Verwendung als Minimumschalter oder als Leerlaufschutz. Dieser Grenzwert G_{Minimum} wird auch dann unterschritten, wenn z.B. die Schwinggabel verklemmt und die Elektronik des Feldgerätes auf ihre Eigenresonanz springt. Darüber liegt der Grenzwert G_{Maximum}, welcher für die Anwendung als Maximumschalter oder Überlaufschutz benutzt wird. Dieser Grenzwert Gₘₐₓᵢₘᵤₘ ist größer als der Grenzwert G_{Minimum}, da die Schwingfrequenz durch das Eintauchen in das Medium eine sehr starke Verkleinerung erfährt, weshalb umgekehrt ein Ansatz am Feldgerät, das als Maximumschalter benutzt wird, sehr groß sein müsste, um diesen unteren Grenzwert G_{Minimum} zu unterschreiten. Allgemein formuliert ist der Grenzwert G davon abhängig, welche Prozessbedingungen herrschen und was gemessen werden soll. Weiter oben befindet sich der Oberwert O, dessen Überschreiten zur Meldung führt, dass die mechanisch schwingfähige Einheit frei oder in einem Medium mit geringerer Dichte schwingt. Oberhalb des Oberwertes O kann noch ein weiterer Wert vorgesehen sein, dessen Überschreiten zu einem Korrosionsalarm führt. Zwischen G_{Minimum} und G_{Maximum} befindet sich eine Zone mit Frequenzen, die nur dann auftreten können, wenn sich Ansatz an der mechanisch schwingfähigen Einheit befindet oder wenn Prozessbedingungen außerhalb den für das Feldgerät gegebenen Spezifikationen liegen, da Grenzwerte G_{Minimum} und G_{Maximum} bereits die Frequenz-Abhängigkeiten von den Prozessbedingungen beinhalten.

### Bezugszeichenliste

- 1: Feldgerät
- 10: Schwingfähige Einheit
- 11: Antriebs-/Empfangseinheit
- 12: Regel-/Auswerteeinheit
- 13: Kontrolleinheit

## Patentansprüche

1. Verfahren zur Erkennung von Ansatz bei einem Feldgerät (1) zur Überwachung und/oder Bestimmung des Füllstands eines Mediums,
mit einer schwingfähigen Einheit (10),
mit einer Antriebs-/Empfangseinheit (11), die die schwingfähige Einheit (10) zu Schwingungen anregt, bzw. die die Schwingungen der schwingfähigen Einheit (10) empfängt,
und
mit einer Regel-/Auswerteeinheit (12), die die Schwingungen der schwingfähigen Einheit (10) regelt bzw. die die Schwingungen der schwingfähigen Einheit (10) auswertet,
wobei die Regel-/Auswerteeinheit (12) einen Ansatzalarm erzeugt,
wenn die Schwingfrequenz (f) der Schwingungen der schwingfähigen Einheit (10) einen einstellbaren Grenzwert (G; G_{Minimum}; G_{Maximum}) unterschreitet, wobei der Grenzwert (G; G_{Minimum}; G_{Maximum}) aus gemessenen und/ oder berechneten Abhängigkeiten der Schwingfrequenz (f) vom Füllstand und von Prozessbedingungen eingestellt wird,
**dadurch gekennzeichnet, dass**
es sich bei den Prozessbedingungen um die Temperatur und/oder den Druck und/oder die Dichte und/oder die Viskosität des Mediums handelt;
und dass der Grenzwert (G; G_{Minimum}; G_{Maximum}) aus der kleinsten Schwingfrequenz (f) in Abhängigkeit von den entsprechenden maximal in Bezug auf das Feldgerät (1) zulässigen Prozessbedingungen und in Abhängigkeit von dem in Bezug auf die Anwendung zulässigen Füllstand eingestellt wird.

2. Verfahren nach Anspruch 1,
**dadurch gekennzeichnet,**
**dass** sich die Abhängigkeiten der Schwingfrequenz (f) vom Füllstand und von den Prozessbedingungen jeweils auf die Ausgestaltung des Feldgeräts (1) und die Ausgestaltung der schwingfähigen Einheit (10) beziehen.

3. Verfahren nach Anspruch 1,
**dadurch gekennzeichnet,**
**dass** der Grenzwert (G) in Abhängigkeit von der Verwendung des Feldgerätes (1), ob als Minimum- (G_{Minimum}) oder Maximumschalter (G_{Maximum}) eingestellt wird.

4. Verfahren nach Anspruch 1 oder 3,
**dadurch gekennzeichnet,**
**dass** der Grenzwert (G; G_{Minimum}; G_{Maximum}) unter Einbeziehung eines maximal zulässigen Ansatzes, bzw. der mit dem maximal zulässigen Ansatz verbundenen Frequenzänderung eingestellt wird.

5. Verfahren nach einem oder mehreren der Ansprüche 1, 3 bis 4,
**dadurch gekennzeichnet,**
**dass** eine Kontrolleinheit (13) vorgesehen ist, die unabhängig von der Regel-/Auswerteeinheit (12) einen Ansatzalarm erzeugt, wenn die Schwingfrequenz (f) der Schwingungen der schwingfähigen Einheit (10) einen einstellbaren Grenzwert (G; G_{Minimum}; G_{Maximum}) unterschreitet.

6. Verfahren nach Anspruch 1 oder 3,
**dadurch gekennzeichnet,**
**dass** die Regel-/Auswerteeinheit (12) eine Freimeldung erzeugt,
wenn die Schwingfrequenz (f) der Schwingungen der schwingfähigen Einheit (10) einen einstellbaren Oberwert (O) überschreitet,
wobei der Oberwert (O) aus gemessenen und/oder berechneten Abhängigkeiten der Schwingfrequenz (f) von Prozessbedingungen und von dem zu bestimmenden
und/oder zu überwachenden Füllstand eingestellt wird.

7. Verfahren nach Anspruch 6,
**dadurch gekennzeichnet,**
**dass** der Oberwert (O) aus der größten Schwingfrequenz (f) in Abhängigkeit von den entsprechenden maximal in Bezug auf das Feldgerät (1) zulässigen Prozessbedingungen und in Abhängigkeit davon, dass die schwingfähige Einheit (10) unbedeckt schwingt, eingestellt wird.

8. Verfahren nach Anspruch 6 oder 7,
**dadurch gekennzeichnet,**
**dass** der Oberwert (O) unter Einbeziehung eines maximal zulässigen Ansatzes, bzw. der mit dem maximal zulässigen Ansatz verbundenen Frequenzänderung eingestellt wird.

9. Verfahren nach zumindest einem der vorherigen Ansprüche 6-8,
**dadurch gekennzeichnet,**
**dass** oberhalb des Oberwertes (O) ein weiterer Wert vorgesehen ist,
dessen Überschreiten zu einem Korrosionsalarm führt.

## Claims

1. Procedure for detecting deposit buildup on a field device (1) for monitoring and/or determining the level of a medium,
with a unit capable of oscillation (10),
with a drive/reception unit (11), which excites the unit capable of oscillation (10) to oscillate, or which receives the oscillations of the unit capable of oscillation (10), and
with a control/evaluation unit (12), which regulates the oscillations of the unit capable of oscillation (10) or which evaluates the oscillations of the unit capable of oscillation (10),
wherein the control/evaluation unit (12) generates a deposit buildup alarm if the oscillation frequency (f) of the oscillations of the unit capable of oscillation (10) fall below a configurable limit value (G ; G_{Minimum} ; G_{Maximum}),
wherein the limit value (G ; G_{Minimum} ; G_{Maximum}) is set on the basis of measured and/or calculated dependencies of the oscillation frequency (f) on the level and on the process conditions,
**characterized in that**
the process conditions concern the temperature and/or the pressure and/or the density and/or the viscosity of the medium;
and **in that** the limit value (G ; G_{Minimum} ; G_{Maximum}) is set based on the minimum oscillation frequency (f) depending on the maximum process conditions permitted in relation to the field device (1) and depending on the admissible level in relation to the application.

2. Procedure as claimed in Claim 1,
**characterized in that**
the dependencies of the oscillation frequency (f) on the level and on the process conditions refer to the design of the field device (1) and the design of the unit capable of oscillation (10).

3. Procedure as claimed in Claim 1,
**characterized in that**
the limit value (G) is set depending on whether the field device (1) is used as a minimum switch (G_{Minimum}) or as a maximum switch (G_{Maximum}).

4. Procedure as claimed in Claim 1 or 3,
**characterized in that**
the limit value (G ; G_{Minimum} ; G_{Maximum}) is set taking into consideration a maximum admissible buildup or the change in frequency associated with the maximum admissible buildup.

5. Procedure as claimed in one or more of the Claims 1, 3 to 4,
**characterized in that**
a control unit (13) is provided which generates a deposit buildup alarm independently of the control/evaluation unit (12) if the oscillation frequency (f) of the oscillations of the unit capable of oscillation (10) drops below a configurable limit value (G ; G_{Minimum} ; G_{Maximum}).

6. Procedure as claimed in Claim 1 or 3,
**characterized in that**
the control/evaluation unit (12) generates "free" notification if the oscillation frequency (f) of the oscillations of the unit capable of oscillation (10) exceeds a configurable upper value (O), wherein the upper value (O) is set based on measured and/or calculated dependencies of the vibration frequency (f) on process conditions and on the level to be determined and/or monitored.

7. Procedure as claimed in Claim 6,
**characterized in that**
the upper value (O) is set based on the maximum oscillation frequency (f) depending on the maximum process conditions admissible in relation to the field device (1) and depending on the unit capable of oscillation (10) oscillating when it is uncovered.

8. Procedure as claimed in Claim 6 or 7,
**characterized in that**
the upper value (O) is set taking into consideration a maximum admissible deposit buildup or the frequency change associated with the maximum admissible deposit buildup.

9. Procedure as claimed in Claims 6-7,
**characterized in that**
an additional value is provided above the upper value (O), which, if exceeded, causes a corrosion alarm to be triggered.

## Revendications

1. Procédé destiné à la détection d'une formation de dépôt sur un appareil de terrain (1) destiné à la surveillance et/ou à la détermination du niveau d'un produit, avec une unité apte à vibrer (10),
avec une unité d'entraînement / de réception (11), qui excite l'unité apte à vibrer (10) en vibrations, ou qui reçoit les vibrations de l'unité apte à vibrer (10),
et
avec une unité de régulation / d'exploitation (12), qui régule les vibrations de l'unité apte à vibrer (10) ou qui exploite les vibrations de l'unité apte à vibrer (10), procédé pour lequel l'unité de régulation / d'exploitation (12) génère une alarme de formation de dépôt lorsque la fréquence (f) des vibrations de l'unité apte à vibrer (10) passe sous un seuil réglable (G ; G_{Minimum} ; G_{Maximum}),
procédé pour lequel la valeur limite (G ; G_{Minimum} ; G_{Maximum}) est réglée à partir de dépendances mesurées et/ou calculées de la fréquence de vibration (f) en fonction du niveau et des conditions du process,
**caractérisé**
**en ce que** concernant les conditions du process, il s'agit de la température et/ou de la pression et/ou de la densité et/ou de la viscosité du produit ;
et **en ce que** la valeur limite (G ; G_{Minimum} ; G_{Maximum}) est réglée à partir de la fréquence de vibration (f) minimale en fonction des conditions de process maximales admissibles par rapport à l'appareil de terrain (1) et en fonction du niveau admissible par rapport à l'application.

2. Procédé selon la revendication 1,
**caractérisé**
**en ce que** les dépendances de la fréquence de vibration (f) en fonction du niveau et des conditions du process se rapportent respectivement à la conception de l'appareil de terrain (1) et à la conception de l'unité apte à vibrer (10).

3. Procédé selon la revendication 1,
**caractérisé**
**en ce que** la valeur limite (G) est réglée, en fonction de l'utilisation de l'appareil de terrain (1), en tant qu'interrupteur minimum (G_{Minimum}) ou en tant qu'interrupteur maximum (G_{Maximum}).

4. Procédé selon la revendication 1 ou 3,
**caractérisé**
**en ce que** la valeur seuil (G ; G_{Minimum} ; G_{Maximum}) est réglée en tenant compte d'un dépôt maximal admissible, ou d'un changement de fréquence associé au dépôt maximal admissible.

5. Procédé selon l'une ou plusieurs des revendications 1, 3 à 4,
**caractérisé**
**en ce qu'**est prévue une unité de contrôle (13) qui génère, indépendamment de l'unité de régulation / d'exploitation (12), une alarme de formation de dépôt lorsque la fréquence (f) des vibrations de l'unité apte à vibrer (10) passe sous une valeur limite (G ; G_{Minimum} ; G_{Maximum}) réglable.

6. Procédé selon la revendication 1 ou 3,
**caractérisé**
**en ce que** l'unité de régulation / d'exploitation (12) génère un message de libération lorsque la fréquence (f) des vibrations de l'unité apte à vibrer (10) dépasse une valeur supérieure (O) réglable, la valeur supérieure (O) étant réglée à partir de dépendances mesurées et/ou calculées de la fréquence de vibration (f) en fonction des conditions du process et du niveau à déterminer et/ou à surveiller.

7. Procédé selon la revendication 6,
**caractérisé**
**en ce que** la valeur supérieure (O) est réglée à partir de la fréquence de vibration (f) maximale en fonction des conditions de process maximales admissibles par rapport à l'appareil de terrain (1) et en fonction du fait que l'unité apte à vibrer (10) vibre lorsqu'elle n'est pas recouverte par le dépôt.

8. Procédé selon la revendication 6 ou 7,
**caractérisé**
**en ce que** la valeur supérieure (O) est réglée en tenant compte d'un dépôt maximal admissible, ou d'un changement de fréquence associé au dépôt maximal admissible.

9. Procédé selon au moins l'une des revendications précédentes 6 à 8,
**caractérisé**
**en ce qu'**est prévue, au-delà de la valeur supérieure (O), une valeur supplémentaire dont le dépassement entraîne une alarme de corrosion.
